# EUROPÄISCHE PATENTANMELDUNG

(11) **EP 3 318 695 A1**
(43) Veröffentlichungstag der Anmeldung: **09.05.2018**
(21) Anmeldenummer: 17199708.3
(22) Anmeldetag: 02.11.2017
(51) Int. Cl.: E04F 13/08, E04B 2/76, F16B 7/04

(54) **UNTERKONSTRUKTION FÜR DEN INNENAUSBAU**

(30) Priorität: 02.11.2016 DE 102016120875
(71) Anmelder: Polenz, Jürgen, 59348 Lüdinghausen (DE)
(72) Erfinder: Polenz, Jürgen, 59348 Lüdinghausen (DE)
(74) Vertreter: Schulte & Schulte

(57) **Zusammenfassung**

Eine Unterkonstruktion 1 für Paneele 4, 5 dient zur Verwendung im Innenausbau von Gebäuden. Zur Verbindung benachbarter Paneele 4, 5 werden an diesen zunächst U-Profile 2, 3 fixiert, welche korrespondierend zueinander ausgebildet sind und nach der Installation gemeinsam einen Träger 6 bilden. Die beiden U-Profile 2, 3 sind durch eine Rastverriegelung miteinander verbunden.

## Beschreibung

Die Erfindung betrifft eine Unterkonstruktion für Paneele für den Innenausbau von Gebäuden, mit zur Verbindung benachbarter Paneele zunächst jeweils an den Paneelen zu fixierenden, korrespondierend zueinander ausgebildeten und nach der Installation gemeinsam einen Träger bildenden U-Profilen.

Beim Innenausbau bzw. Trockenbau finden als Paneele ausgebildete großflächige, plattenartige Bauelemente Einsatz. Zumeist werden die Unterkonstruktionen hergestellt, indem zunächst Träger und dann z.B. Verkleidungen, Fassadenelemente oder andere Bauelemente installiert und an den Trägern befestigt werden. Eine Vielzahl von Verbindungseinheiten gewährleistet dann die Verbindung zwischen den korrespondierenden Konstruktionselementen, wozu sich Schrauben und andere bewährte Befestigungsmittel anbieten. Bei einigen Anwendungen sind allerdings besondere Anforderungen gegeben, neben Wänden oder Fassadenelementen, speziell im Innenausbau, etwa für Ladenlokale. In die dafür vorgesehenen Paneele werden häufig Monitore, Displays oder andere elektronische Einrichtungen unter Berücksichtigung von diversen Vor- und Rücksprüngen, Einbauten, Fächern etc. integriert. Übergänge, Anschlüsse von Paneelen untereinander oder im Bereich von Boden und Decke, Winkel, Ecken, Fugen etc. müssen dabei höchsten Ansprüchen genügen, Fertigungstoleranzen sind allenfalls minimal. Dies wiederum erfordert Verbindungsmittel von höchster Qualität, jede einzelne Verbindung muss sicher hergestellt und gegebenenfalls wieder gelöst werden können. Aus der DE 10 2012 017 105 sind bereits Unterkonstruktionen bekannt, bei denen eine Vorinstallation von Profilen an den Paneelen erfolgt. Anschließend werden Befestigungsmittel zwischen einer eingefahrenen Vorposition und einer ausgefahrenen Fixierposition von außen verstellt, indem von außen ein temporäres Magnetfelde aufgebracht wird. Die die Unterkonstruktion bildenden Konstruktionselemente werden also zunächst mit den eigentlichen Bauelementen oder Teilen von diesen verbunden, d.h. zunächst wird das jeweilige Konstruktionselement z.B. an einem Innenausbauelement befestigt, erst anschließend werden die jeweiligen Konstruktionselemente zueinander ausgerichtet und dann kommen die Verbindungsmittel zum Einsatz.

Der vorliegenden Erfindung stellt sich die Aufgabe, eine Unterkonstruktion für Paneele oder Teilen von diesen zu schaffen, die sich leicht, schnell, kostengünstig und sicher installieren lässt.

Diese Aufgabe wird dadurch gelöst, dass die beiden U-Profile durch eine Rastverriegelung miteinander verbunden sind.

Maßgeblich für die Unterkonstruktion sind die Träger, welche vor Ort aus jeweils zwei U-Profilen gebildet werden. Letztere werden zunächst jeweils an einem Paneel als Vorinstallation befestigt, anschließend werden die Paneele zueinander ausgerichtet, erst dann werden die U-Profile zu dem Träger zusammengefügt. Dies geschieht dann über eine Rastverbindung, d.h. beim Zusammensetzen der beiden U-Profile zum gemeinsamen Träger verrasten die beiden Profile ineinander, wodurch eine dauerhaft sichere Verbindung zwischen den Profilen und insbesondere damit auch den Paneelen oder deren Teilen gewährleistet wird.

Der Witz einer Rastverbindung liegt darin, dass diese einfach und sicher hergestellt werden kann, dass sich die Vollendung der Verbindung für den Installierenden leicht und unmissverständlich nachvollziehen lässt. Sind die beiden korrespondierenden U-Profile entsprechend ineinander gesetzt, bestätigt sich das durch ein Knackgeräusch. Wenn eine Rastverriegelung als alleinige Verbindung zwischen zwei U-Profilen dient, eine einzige Rastverriegelung also die Verbindung zwischen den Profilen herstellt, lässt sich diese entsprechend noch leichter herstellen. Es liegt auf der Hand, dass mit nur einer Rastverbindung pro aus zwei Profilen zusammen gebautem Träger erhebliche Vorteile hinsichtlich Zeit- und Materialaufwand und damit kostenmäßig verbunden ist.

Eine besonders praktische Variante der Erfindung sieht vor, dass die beiden U-Profile im verbundenen Zustand gemeinsam ein Kastenprofil bilden, dass also die beiden miteinander zu verbindenden U-Profile mit ihren offenen Seiten ineinander gesetzt werden und dann das letztlich geschlossene Kastenprofil ein besonders hohen Anforderungen standhaltendes Profil bildet.

In diese Richtung zielt auch der Vorschlag ab, wonach ein Träger aus zwei U-Profilen unterschiedlicher Größe gebildet ist, so dass miteinander zu verbindende U-Profile so dimensioniert sind, dass ein größeres erstes U-Profil ein kleineres zweites U-Profil aufnimmt und sich die beiden U-Profile gewissermaßen ineinander setzen lassen. Dazu korrespondieren also die äußeren Abmessungen des kleinen und die inneren Abmessungen des größeren Profils.

Was nun die Rastverriegelung betrifft, ist vorgesehen, dass das erste U-Profil als Teil der Rastverbindung einen quer zur Längsachse des U-Profils angeordneten Bolzen aufweist, welcher mit einem noch vorzustellenden Rastmittel des damit zu verbindenden Profils korrespondiert Der Bolzen ist dabei parallel zum Gurt des U-Profils in den beiden gegenüberliegenden Flanschen gelagert.

Im Trockenbau, speziell im Ladenbau müssen Bauelemente höchsten Anforderungen genügen. Angesichts von diversen in diesen Ausbau zu integrierenden Geräten wie Monitoren, Displays oder elektronischen Einrichtungen müssen diverse Vor- und Rücksprünge, Einbauten, Fächer etc. integriert werden. Dies macht gegebenenfalls die nachträgliche Abstimmung der Ausrichtung der Paneele oder Paneelteile notwendig, wozu in den Träger eine Justiervorrichtung für die Rastverriegelung integriert ist.

Gedacht ist etwa daran, dass der Bolzen zur Justierung der Rastverriegelung in Richtung der Längsachse des ersten U-Profils verschiebbar gelagert ist. Bei dieser Variante der Erfindung kann also die bereits hergestellte Rastverriegelung zwischen den jeweiligen Rastelementen bzw. U-Profilen auch nach der Verbindung der benachbarten Paneele und damit der U-Profile in besonders vorteilhafter Weise nachjustiert werden. Ermöglicht wird dies durch die flexible Lagerung des Bolzens, der in noch zu beschreibender Weise über einen Mechanismus in geringem Maße auch nach Herstellung der Rastverbindung noch in Richtung der Längsachse des Profils verschoben werden kann. Diese Justierung ermöglicht darüber hinaus eine gewisse Flexibilität der ineinander zu setzenden U-Profile im Rahmen der Herstellung der Rastverbindung.

Die Verschiebbarkeit des in dem ersten U-Profil sitzenden Bolzens kann erreicht werden, indem das erste U-Profil in seinen beiden Flanschen ein sich in Richtung der Längsachse des ersten U-Profils erstreckendes Langloch aufweist, das für den Bolzen ein gewisses Spiel schafft.

Eine weitere vorteilhafte Ausführungsform der Erfindung sieht vor, dass die Justiervorrichtung ein Spannglied umfasst, über das der Bolzen in Richtung der Längsachse des ersten U-Profils verstellbar ist. Die Lage des Bolzens in seiner Funktion als Teil der Rastverbindung wird also über ein Spannglied variiert. Bei Öffnung des Spanngliedes verfügt der Bolzen über ein entsprechendes Spiel, wird das Spannglied hingegen angezogen, wird der Sitz des Bolzens im Langloch fester.

Das Spannglied ist vorzugsweise so ausgebildet, dass über dessen Rotation die Justierung durchgeführt werden kann, d.h. dass die Rotation des Spanngliedes zu einer Verschiebung des Bolzens in Richtung der Längsachse des ersten U-Profils führt.

Wenn als Spannglied eine in einer sich quer zur Richtung der Längsachse des U-Profils erstreckenden Zwischenwandung gelagerte Spannschraube dient, ist eine besonders zweckmäßige Ausführungsform der Erfindung und ein denkbar einfach zu handhabender Justiermechanismus geschaffen.

Um die entsprechenden Kräfte und Monumente zwischen Spannglied und Bolzen übertragen zu können, sieht die Erfindung vor, dass Spannglied und Bolzen über einen Spannbügel miteinander verbunden sind, der sich zwischen Spannglied und Bolzen erstreckt.

Der Bolzen als Teil der Rastverbindung zwischen den miteinander zu verbindenden U-Profilen wurde ja bereits ausführlich angesprochen. Als Gegenstück ist vorgesehen, dass das zweite U-Profil als Teil der Rastverbindung einen Rastriegel umfasst, welcher gegen die Kraft einer in dem zweiten U-Profil vorgesehenen Feder gelagert ist. Wird das kleinere in das größere U-Profil eingesetzt und damit die Verbindung zwischen Paneelen oder Teilen von Paneelen etc. hergestellt, legt sich der Rastriegel um den Bolzen und rastet in dieser Position dank der den Rastmitteln zugeordneten Feder ein. Dabei genügt es grundsätzlich, wenn solch eine Baugruppe aus Rastriegel und Feder einerseits und Bolzen andererseits als alleinige Verbindung zwischen zwei U-Profilen vorgesehen ist.

Dass der Rastriegel um eine parallel zur Längsachse des Bolzens verlaufende Achse schwenkbar gelagert, folglich als Schwenkriegel ausgebildet ist, komplettiert dann den Rastmechanismus und die solide Verbindung zwischen Schwenkriegel und Bolzen, auch dank einer riegelseitigen, bogenartigen Führungskulisse für den Bolzen in dem Schwenkriegel.

Vorgestellt wurde bereits eine Justiervorrichtung in Bezug auf die Ausrichtung des Trägers in Richtung seiner Längsachse und die Rastverbindung. Ergänzend ist vorgesehen, dass der Träger mit einer Justiervorrichtung zur Horizontalausrichtung ausgerüstet ist, um sich beim Zusammenbau der Träger bzw. der Paneele ergebende Toleranzen ausgleichen zu können.

Vorgesehen ist in diesem Zusammenhang, dass die Justiervorrichtung als Handhabe eine quer zur Längsachse des U-Profils verstellbare Justierschraube umfasst, welche als Verstellglied zur Höhenverstellung dient. Benachbarte Träger können dank der als Justierschraube ausgebildeten Handhabe zwecks Justierung in geringfügigem Maße auseinandergedrückt werden.

Dazu empfiehlt es sich, dass ein die Justierschraube umfassendes Gehäuse an dem Träger befestigt ist. Solch ein käfigartiges Gehäuse umfasst zudem seitliche Wandungen und den zwischen diesen angeordneten Verstellmechanismus.

Konkret sieht dies so aus, dass in dem Gehäuse ein verschieblich gelagerter Klotz und/oder ein fest installierter Klotz als Lager für die Justierschraube positioniert ist. Ein erster Klotz dient zur besseren Verteilung der Kräfte beim Justieren, während ein zweiter Klotz fest installiert ist und somit als Lager für die Justierschraube dient.

Die Erfindung zeichnet sich insbesondere dadurch aus, dass eine Unterkonstruktion für Paneele zur Verwendung im Innenausbau von Gebäuden geschaffen ist, die eine leichte, günstige und sichere Montage mit besonders geeigneten Möglichkeiten zur Ausrichtung der Bauelemente ermöglicht. U-Profile unterschiedlichen Typs als spätere Verbindungsmittel werden zunächst jeweils an den großflächigen, plattenartigen Bauelementen fixiert. Die Verbindung zwischen diesen Paneelen erfolgt dann über die ineinander verrastenden U-Profile. Diese sind dazu so dimensioniert, dass sie sich unter gleichzeitiger Herstellung der Rastverriegelung so ineinander setzen lassen, dass sie dann gemeinsam ein praktisch geschlossenes Kastenprofil ausbilden. Das erste, größere Profil umfasst einen Bolzen als Teil der Rastverbindung, welcher in den Flanschen des U-Profils quer zu dessen Längsachse gelagert ist. Teilweise umschlossen wird dieser Bolzen dann beim Einsetzen des zweiten, kleineren U-Profils in das erste, größere. Ein Schwenkriegel als Rastmittel umschließt den Bolzen und rastet dank dessen Lagerung gegen die Kraft einer Feder ein. Zur Nachjustierung in Richtung der Längsachse des Profils dient ein erster Justiermechanismus mit einer Spannschraube, welche über einen Spannbügel mit dem verschieblich in den Flanschen gelagerten Bolzen verbunden ist. Ein zweiter Justiermechanismus bezieht sich auf die horizontale Ausrichtung der Träger zueinander. Besonders vorteilhaft ist es auch, dass die beiden ineinander gesetzten U-Profile aufgrund der nur einen Rastverbindung bereits ausreichend gesichert sind, so dass es nicht notwendig ist, weitere Befestigungsmittel oder -einrichtungen vorzusehen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1:: ein Tragwerk ohne Paneele,
- Figur 2:: ein Tragwerk mit Paneelen,
- Figur 3:: ein U-Profil ersten Typs,
- Figur 4:: ein U-Profil zweiten Typs,
- Figur 5:: eine Explosionsdarstellung des Trägers,
- Figur 6:: eine Justiervorrichtung und
- Figur 7:: eine Verrastung.

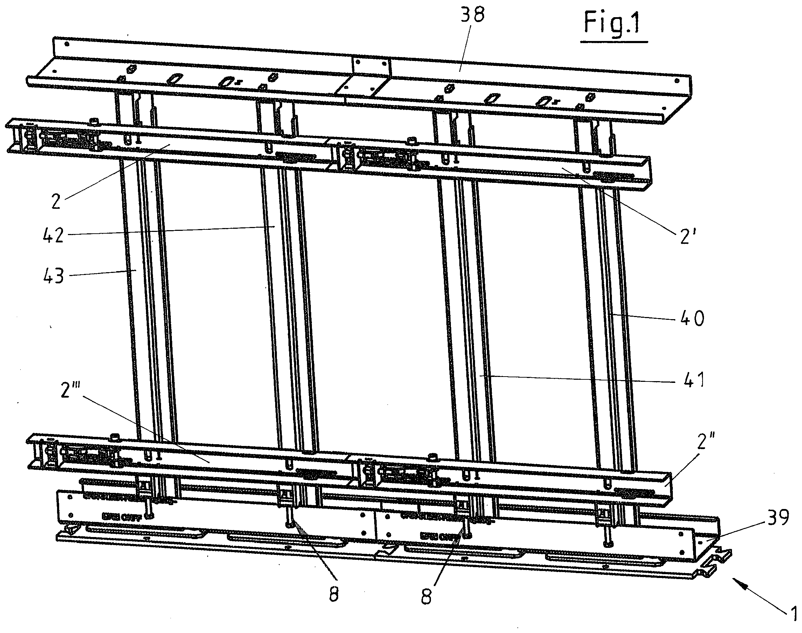

Figur 1 zeigt ein Tragwerk ohne installierte Paneele, bei dem das für die Erfindung wesentliche erste U-Profil mit den Bezugszeichen 2, 2', 2", 2''' bezeichnet ist. Das zweite U-Profil bzw. das Paneel, dem dieses zugeordnet ist, ist in Figur 1 nicht dargestellt. Mit 8, 8' sind Justiervorrichtungen zur horizontalen Ausrichtung der U-Profile 2 beispielhaft bezeichnet. Neben solchen Profilen zeigt Figur 1 ein Deckenprofil 38 und ein Bodenprofil 39 als weitere Bestandteile dieser Unterkonstruktion 1 sowie vier senkrechte Träger 40-43.

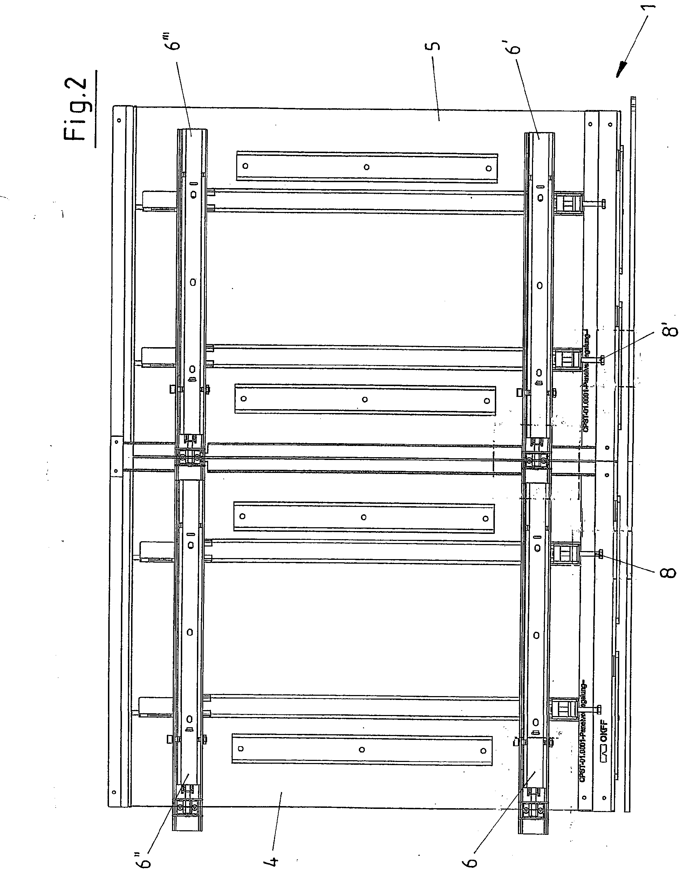

Die Unterkonstruktion 1 ist in Figur 2 dann mit installierten Paneelen 4, 5 veranschaulicht. Vor deren Installation erfolgt zunächst eine Fixierung zweier unterschiedlicher Typen von U-Profilen, die zu einem Träger 6, 6', 6", 6''' verbunden werden, bevor die Paneele 4, 5 durch den Einrastmechanismus miteinander fixiert werden.

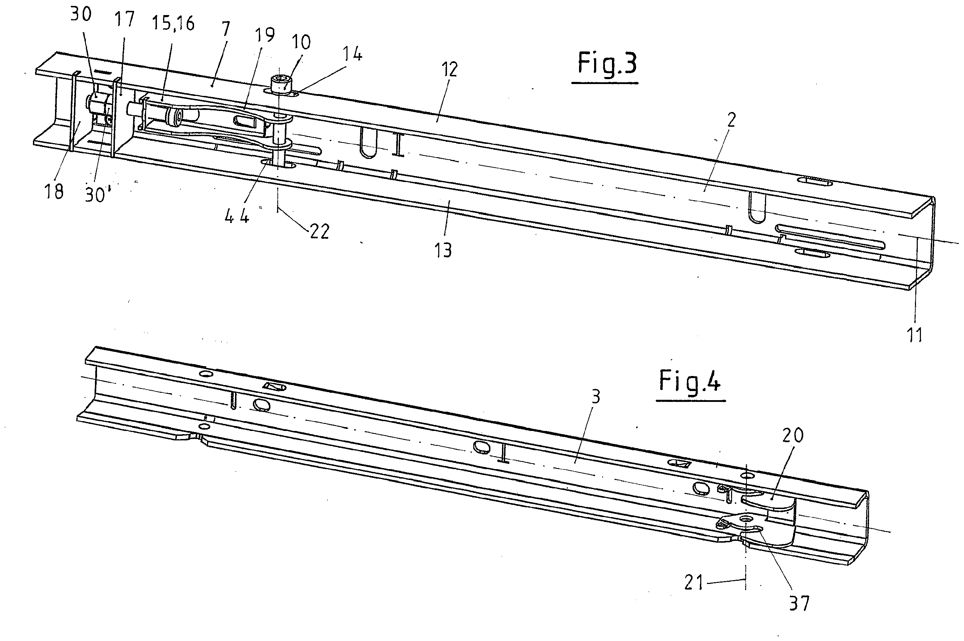

In Figur 3 ist das erste, größere Profil 2 gezeigt, dessen Teil des Rastmechanismus durch den Bolzen 10 mit dessen Längsachse 22 verwirklicht wird. Dieser quer zur Längsachse 11 des Profils 2 gelagerte Bolzen 10 ist in den Flanschen 12, 13 des Profils 2 verschieblich gelagert, wozu der Bolzen 10 in einem Langloch 14, 44 gehalten ist. Dazu ist dem Bolzen 10 eine Justiervorrichtung 7 zugeordnet. Gebildet wird diese Justiervorrichtung 7 durch das als Spannschraube 16 ausgebildete Spannglied 15, im Falle der Justierung zu bedienen über die Handhabe 30, 30'. Diese Spannschraube 16 ist in der Zwischenwandung 17 gelagert, die Handhabe 30, 30' befindet sich jenseits dieser Zwischenwandung 17, flankiert durch eine weitere Wandung 18. Eine Rotation des Spanngliedes 15 wird über den Spannbügel 19 auf den Bolzen 10 übertragen, der sich entsprechend in seiner Position in den Langlöchern 14, 44 justieren lässt.

Dazu zeigt Figur 4 ein zweites, kleineres U-Profil mit dem federnd gelagerten Rastmittel bzw. Schwenkriegel 20. Beim Einrasten schwenkt dieser Schwenkriegel 20 so um den hier nicht dargestellten Bolzen und damit um die Achse 21, dass dieser dank der gebogenen Führungskulisse 37 in dem Schwenkriegel 20 seine eingerastete Funktion einnehmen kann.

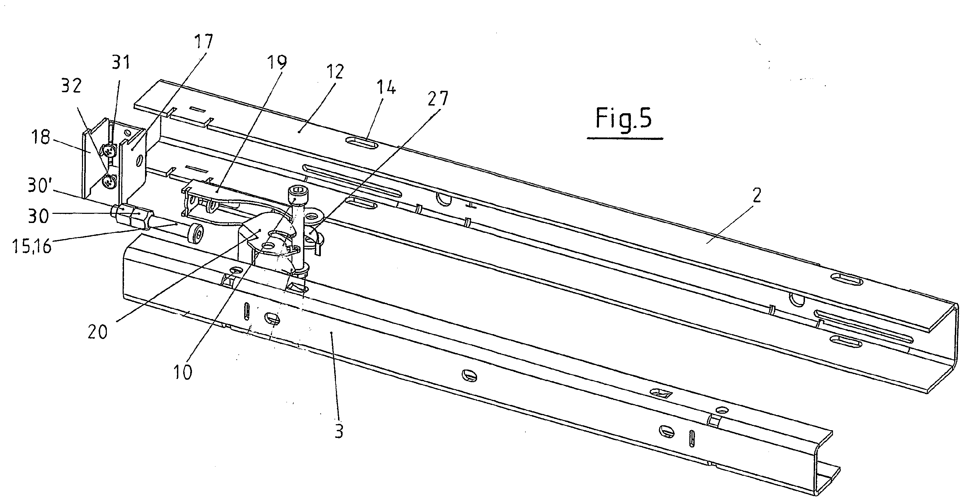

Eine Explosionsdarstellung der beiden U-Profile 2, 3 samt der für die Justiervorrichtung 7 notwendigen Bauteile zeigt Figur 5. Gut zu erkennen, wie das kleinere Profil 3 in das größere Profil 2 eingesetzt werden kann, sodass sich dann ein hohen Anforderungen standhaltendes Kastenprofil ausbildet. Auf der Darstellung nach Figur 5 links zeigt sich die Justiervorrichtung 7 mit der Handhabe 30, 30' für das als Spannschraube 16 ausgebildete Spannglied 15 mit der Handhabe 30, 30' an dem vorderen Ende. Aufgenommen wird dieses Spannglied 15 von der Wandung 17. Zwei Befestigungsmittel sind mit den Bezugszeichen 31 und 32 versehen. Eine Rotation des Spanngliedes 15 in Form der Bedienung der Handhabe 30, 30' wird über den Spannbügel 19 auf den ansonsten in dem Langloch 14 angeordneten Bolzen 10 übertragen. Der zweite Teil der Rastverriegelung ist durch den Schwenkriegel 20 symbolisiert. Die Feder, welche für das Einrasten maßgeblich ist, ist mit dem Bezugszeichen 27 versehen.

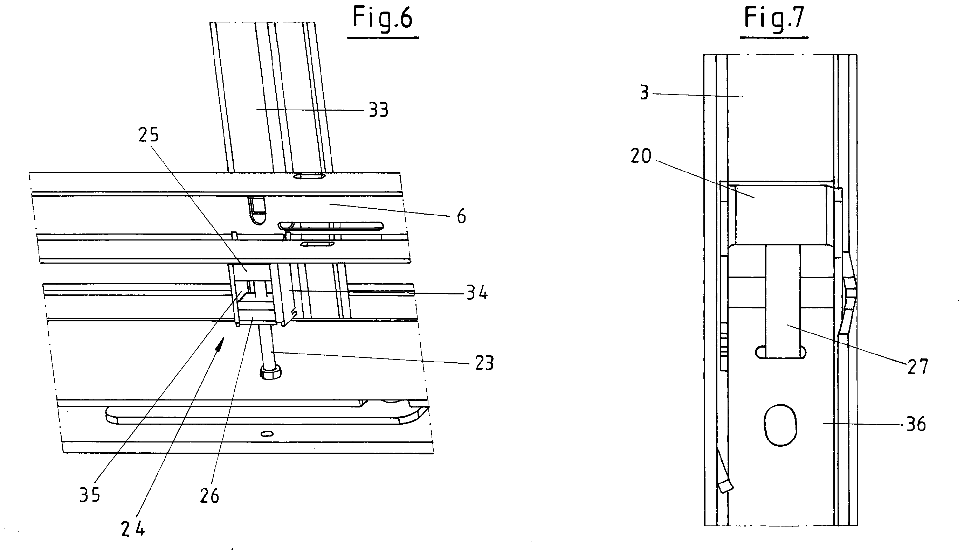

Zur Illustration der Funktion der Justiervorrichtung 8 dient insbesondere Figur 6. Zum Höhenausgleich in horizontaler Richtung wird die Justierschraube 23 samt Klotz 25 nach oben geschraubt, wozu der mit 26 bezeichnete Klotz in dem Gehäuse 24 als Lager dient. Das Gehäuse 24 umfasst ferner zwei Wandungen 34, 35. Mit 33 ist noch der Längsträger bezeichnet.

Schließlich zeigt Figur 7 ein U-Profil 2 mit Blick auf den Gurt 36 dieses Profils 2 und dem Rastmittel 20, gegen die Kraft der Feder 27 gelagert, um eine Rastverbindung mit dem hier nicht dargestellten Bolzen des ersten, größeren Profils herzustellen.

## Patentansprüche

1. Unterkonstruktion (1) für Paneele (4, 5) für den Innenausbau von Gebäuden, mit zur Verbindung benachbarter Paneele (4, 5) zunächst jeweils an den Paneelen (4, 5) zu fixierenden, korrespondierend zueinander ausgebildeten und nach der Installation gemeinsam einen Träger (6) bildenden U-Profilen (2, 3),
**dadurch gekennzeichnet,**
**dass** die beiden U-Profile (2, 3) durch eine Rastverriegelung miteinander verbunden sind.

2. Unterkonstruktion nach Anspruch 1,
**dadurch gekennzeichnet,**
**dass** eine Rastverriegelung als alleinige Verbindung zwischen zwei U-Profilen (2, 3) dient.

3. Unterkonstruktion nach Anspruch 1,
**dadurch gekennzeichnet,**
**dass** die beiden U-Profile (2, 3) im verbundenen Zustand gemeinsam ein Kastenprofil bilden.

4. Unterkonstruktion nach Anspruch 1,
**dadurch gekennzeichnet,**
**dass** ein Träger (6) durch zwei U-Profile (2, 3) unterschiedlicher Größe gebildet ist.

5. Unterkonstruktion nach Anspruch 1,
**dadurch gekennzeichnet,**
**dass** das erste U-Profil (2) als Teil der Rastverbindung einen quer zur Längsachse (11) des U-Profils (2) angeordneten Bolzen (10) aufweist.

6. Unterkonstruktion nach Anspruch 1,
**dadurch gekennzeichnet,**
**dass** in den Träger (6) eine Justiervorrichtung (7) für die Rastverriegelung integriert ist.

7. Unterkonstruktion nach Anspruch 6,
**dadurch gekennzeichnet,**
**dass** der Bolzen (10) zur Justierung der Rastverriegelung in Richtung der Längsachse (11) des ersten U-Profils (2) verschiebbar gelagert ist.

8. Unterkonstruktion nach Anspruch 7,
**dadurch gekennzeichnet,**
**dass** das erste U-Profil (2) in seinen beiden Flanschen (12, 13) ein sich in Richtung der Längsachse (11) des ersten U-Profils (2) erstreckendes Langloch (14) aufweist.

9. Unterkonstruktion nach Anspruch 6,
**dadurch gekennzeichnet,**
**dass** die Justiervorrichtung (7) ein Spannglied (15) umfasst, über das der Bolzen (10) in Richtung der Längsachse (11) des ersten U-Profils (2) verstellbar ist.

10. Unterkonstruktion nach Anspruch 9,
**dadurch gekennzeichnet,**
**dass** die Rotation des Spanngliedes (15) zu einer Verschiebung des Bolzens (10) in Richtung der Längsachse (11) des ersten U-Profils (2) führt.

11. Unterkonstruktion nach Anspruch 9,
**dadurch gekennzeichnet,**
**dass** als Spannglied (15) eine in einer sich quer zur Richtung der Längsachse (11) des U-Profils (2) erstreckenden Zwischenwandung (17) gelagerte Spannschraube (16) dient.

12. Unterkonstruktion nach Anspruch 9,
**dadurch gekennzeichnet,**
**dass** Spannglied (15) und Bolzen (10) über einen Spannbügel (19) miteinander verbunden sind.

13. Unterkonstruktion nach Anspruch 1,
**dadurch gekennzeichnet,**
**dass** das zweite U-Profil (3) als Teil der Rastverbindung einen Rastriegel (20) umfasst, welcher gegen die Kraft einer in dem zweiten U-Profil (3) vorgesehenen Feder (27) gelagert ist.

14. Unterkonstruktion nach Anspruch 13,
**dadurch gekennzeichnet,**
**dass** der Rastriegel (20) um eine parallel zur Längsachse (22) des Bolzens (10) verlaufende Achse (21) schwenkbar gelagert ist.

15. Unterkonstruktion nach Anspruch 1,
**dadurch gekennzeichnet,**
**dass** der Träger (6) mit einer Justiervorrichtung (8) zur Horizontalausrichtung ausgerüstet ist.

16. Unterkonstruktion nach Anspruch 15,
**dadurch gekennzeichnet,**
**dass** die Justiervorrichtung (8) als Handhabe eine quer zur Längsachse (11) des U-Profils (2, 3) verstellbare Justierschraube (23) umfasst.

17. Unterkonstruktion nach Anspruch 16,
**dadurch gekennzeichnet,**
**dass** ein die Justierschraube (23) umfassendes Gehäuse (24) an dem Träger (6) befestigt ist.

18. Unterkonstruktion nach Anspruch 17,
**dadurch gekennzeichnet,**
**dass** in dem Gehäuse (24) ein verschieblich gelagerter Klotz (25) und/oder ein fest installierter Klotz (26) als Lager für die Schraubvorrichtung (23) positioniert ist.
